# EUROPEAN PATENT APPLICATION

(11) **EP 1 431 734 A1**
(43) Date of publication of application: **23.06.2004**
(21) Application number: 03028749.4
(22) Date of filing: 12.12.2003
(51) Int. Cl.: G01M 3/04

(54) **Leak detection by chemical reactions at the leak site**

(30) Priority: 16.12.2002 US 321103
(71) Applicant: AIR PRODUCTS AND CHEMICALS, INC., Allentown, PA 18195-1501 (US)
(72) Inventor: Puri, Pushpinder, Singh, Emmaus, PA 18049 (US); Lal, Gauri, Sankar, Whitehall, PA 18052 (US); Fernbacher, John, Matthew, Allentown, PA 18103 (US)
(74) Representative: Kador & Partner

(57) **Abstract**

An apparatus for detecting a leak of a fluid from a vessel having an inner wall and an outer wall includes at least one chemical material layer adjacent the outer wall. At least a portion of the chemical material layer is adapted to undergo a chemical reaction with a portion of the fluid leaking through the outer wall. The apparatus may also include at least one semi-permeable material layer adjacent the chemical material layer. The fluid may be a pressurized gas, such as hydrogen or another gas that will react with the chemical material layer to produce a detectable odor and/or a detectable discoloration of the chemical material layer.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND OF THE INVENTION

The present invention relates to fluid leak detection, and in particular to the detection of a gas leak at the leak site by detecting a discoloration of materials and/or an emission of odors resulting from chemical reactions.

With the advent of the fuel cell technology and a drive for clean fuel, hydrogen gas is emerging as a leading candidate for the fuel of choice. In addition to the benefit of being oxidizable in an emission free manner, hydrogen may be obtained from an abundant, renewable, resource, water.

For hydrogen to become a consumer fuel for automobile and domestic power generation, safety is paramount. Although safe handling and use of hydrogen is well understood, warnings are needed to alert against any leaks. Hydrogen sensors are commercially available but are not considered to be an absolute safeguard against leaks due to their potential for malfunctioning, change of air currents, etc. Human senses, in particular, the sense of smell, are considered to be the ultimate safeguard against leaks. Since hydrogen is an odorless gas, odorants are preferably incorporated in hydrogen for easy leak detection. A review of the codes, standards, regulations, recommendations, and certifications on the safety of gaseous fuels is addressed in a report, Proc. U.S. DOE Hydrogen Program Rev. (1996), Vol. 2, pages 569-604.

U.S. Patent No. 6,063,632 teaches a method and device for the detection of water leaks using a water-soluble barrier containing an odorant. In one embodiment, the odorant is released into the atmosphere when leaking water dissolves the barrier. In another embodiment, material contained in the barrier is transformed into an odorant upon contact of the material with water. (Col. 2, II. 10-13). The method and device taught by this patent are not applicable to the detection of gas leaks.

Odorization of gases for leak detection is well known in the natural gas and petroleum gas industries. For example, a paper by M.J. Usher (*Proc. Int. Scho. Hydrocarbon Meas*. 73^{rd}, pages 743-48 (1998)) reviews the history, application, compounds, and safety practices in selecting and applying odorants in the natural gas industry. Mixing small quantities of odorants with gases is a substantially universal practice in natural and petroleum gases. For example, a paper by I. Katuran (*Proc. Int. Sch. Hydrocarbon Meas*., 64^{th}, pages 325-30 (1989)) reports on natural gas odorants, their safety and handling precautions, handling techniques, and methods of adding odorants to gases.

Nearly all of the methods for odorization of natural and petroleum gases consist of metering a certain amount of the odorant into a gas stream to a level where detection can be made by the human sense of smell. Natural gas for public gas supplies typically contains 5-10 mg of sulfur per cubic meter of gas. However, odorants for hydrogen used as an energy source for fuel cells have unique requirements which must be met. This is because most of the commercial odorants used in gas leak detection act as poisons for the catalysts used in hydrogen based fuel cells, most specifically for the PEM (polymer electrolyte membrane or proton exchange membrane) fuel cells. Chemical compounds based on mixtures of acrylic acid and nitrogen compounds have been adopted to achieve a sulfur-free odorization of a gas. See, for example, WO 00/11120 (PCT/EP99/05639) by Haarmann & Reimer GmbH. However, these formulations are either ineffective or do not have general acceptance by users. Also, in the use of natural gas and other petroleum gases for hydrogen generation for fuel cell applications, sulfur free natural or petroleum gases are needed, or else a desulfurization step must be incorporated in the reforming process, which adds further cost to hydrogen generation.

The PEM fuel cells are sulfur intolerant because sulfur compounds poison the noble metal catalysts used in these fuel cells. If sulfur-containing odorants are used, it would be necessary to remove sulfur containing materials, like mercaptan odorants, from the feed gas using materials like zinc oxide. The sulfur containing materials, like thiophenes, cannot be removed by zinc oxide and may require a hydrodesulfurization process, using hydrogen gas, to remove sulfur. This all will add to the cost of the process.

It is, therefore, desired to have a method and system for gas leak detection which do not use odorants, especially sulfur-based odorants, in the gas for leak detection.

It is further desired to have a method and system for the leak detection of fluids in storage and delivery systems which can be used for gas leak detection using the senses of smell and/or sight without contaminating the bulk (entire) fluid.

It is also desired to have a method and system for fluid leak detection which overcome the difficulties and disadvantages of the prior art to provide better and more advantageous results.

### BRIEF SUMMARY OF THE INVENTION

The present invention is an apparatus and method for detecting a leak of a fluid from a vessel. Typically, the fluid leaking from the vessel is leaking to a surrounding atmosphere. There are several embodiments of the apparatus and the method, as discussed below. In a number of the embodiments, the fluid is a pressurized gas.

The present invention utilizes one or more chemical reactions. The term "chemical reaction" as used herein means a reaction wherein one or more new species are produced by the chemical change of one or more components when certain conditions are provided for them to react.

With regard to the apparatus of the present invention, a first embodiment is an apparatus for detecting a leak of a fluid from a vessel having an inner wall and an outer wall. The apparatus includes at least one chemical material layer adjacent the outer wall. At least a portion of the chemical material layer is adapted to undergo a chemical reaction with a portion of the fluid leaking through the outer wall.

There are several variations of the first embodiment of the apparatus. In one variation, the chemical reaction results in a detectable discoloration of the chemical material layer. In a variant of that variation, the detectable discoloration is detectable by a sense of sight of a living being.

In another variation, the chemical reaction results in a detectable odor being emitted from the chemical material layer. In a variant of that variation, the detectable odor is detectable by a sense of smell of a living being.

In yet another variation, the chemical reaction results in a detectable discoloration of the chemical material layer and/or in a detectable odor being emitted from the chemical material layer.

In still yet another variation of the first embodiment of the apparatus, the fluid is hydrogen. In another variation, at least a portion of the fluid is a gas stored and/or transported in the vessel. In a variant of this variation, at least a portion of the gas is at or above an ambient pressure.

Another embodiment of the apparatus is similar to the first embodiment, but includes at least one semi-permeable material layer adjacent the chemical material layer. In a variation of this embodiment, at least a portion of the semi-permeable material layer is a polymer selected from a group consisting of a rubbery polymer, a glassy polymer, and combinations thereof, the rubbery polymer being selected from a group consisting of polydimethyl siloxanes, poly phasphazenes, and combinations thereof, and the glassy polymer being selected from a group consisting of polyimides, polysulfones, polyamides, polyarylates, polyolefins, polyetherketones, polycarbonates, and combinations thereof.

Yet another embodiment is a method for detecting a leak of a pressurized gas from a vessel having an inner wall and an outer wall. The apparatus includes at least one chemical layer adjacent the outer wall. At least a portion of the chemical material layer is adapted to undergo a chemical reaction with a portion of the fluid leaking through the outer wall. The chemical reaction results in a detectable discoloration of the chemical material layer, or a detectable odor being emitted from the chemical material layer, or both a detectable discoloration of the chemical material layer and a detectable odor being emitted from the chemical material layer. The detectable discoloration is detectable by a sense of sight of a living being and the detectable odor is detectable by a sense of smell of a living being. In a variation of this embodiment, the pressurized gas is hydrogen.

Another embodiment of the apparatus is similar to the last embodiment discussed above, but includes at least one semi-permeable material layer adjacent the chemical material layer.

Another aspect of the invention is a vessel having an apparatus as in any of the above-described embodiments or in any of the variations or variants thereof.

With regard to the method of the present invention, there also are several embodiments. The first embodiment is a method for detecting a flow of a fluid leaking from a vessel having an inner wall and an outer wall. The method includes multiple steps. The first step is to provide at least one chemical material layer adjacent the outer wall, at least a portion of the chemical material layer adapted to undergo a chemical reaction with the fluid. The second step is to transmit the flow of the fluid from the vessel through the outer wall to the chemical material layer. The third step is to react in the chemical reaction at least a portion of the chemical material layer with a portion of the flow of the fluid transmitted to the chemical material layer, whereby the chemical reaction results in a detectable discoloration of the chemical material layer and/or a detectable odor being emitted from the chemical material layer to a surrounding atmosphere. The fourth step is to detect the detectable discoloration and/or the detectable odor.

There are several variations of the first embodiment of the method. In one variation, the detectable discoloration is detectable by a sense of sight of a living being. In another variation, the detectable odor is detectable by a sense of smell of a living being.

In yet another variation, the fluid in hydrogen. In still yet another variation, at least a portion of the fluid is a gas stored and/or transported in the vessel. In a variant of this variation, at least a portion of the gas is at or above an ambient pressure.

Another embodiment of the method is similar to the first embodiment, but includes additional steps. The first additional step is to provide at least one semi-permeable material layer adjacent the chemical material layer, the semi-permeable material layer having an outer surface surrounded by the surrounding atmosphere. The second additional step is to transmit at least a portion of the detectable odor and/or an optical emission from at least a portion of the detectable discoloration through the semi-permeable material layer. In a variation of this embodiment, at least a portion of the semi-permeable material layer is a polymer selected from a group consisting of a rubbery polymer, a glassy polymer, and combinations thereof, the rubbery polymer being selected from a group consisting of polydimethyl siloxanes, poly phasphazenes, and combinations thereof, and the glassy polymer being selected from a group consisting of polyimides, polysulfones, polyamides, polyarylates, polyolefins, polyetherketones, polycarbonates, and combinations thereof.

Another embodiment is a method for detecting a flow of a pressurized gas leaking from a vessel having an inner wall and an outer wall. The method includes multiple steps. The first step is to provide at least one chemical material layer adjacent the outer wall. At least a portion of the chemical material layer is adapted to undergo a chemical reaction with the pressurized gas. The second step is to transmit the flow of the pressurized gas from the vessel through the outer wall to the chemical material layer. The third step is to react in the chemical reaction at least a portion of the chemical material layer with a portion of the flow of the pressurized gas transmitted to the chemical material layer, whereby the chemical reaction results in a detectable discoloration of the chemical material layer and/or a detectable odor being emitted from the chemical material layer to a surrounding atmosphere. The fourth step is to detect the detectable discoloration by a sense of sight of a living being and/or the detectable odor by a sense of smell of a living being. In a variation of this embodiment, the pressurized gas is hydrogen.

Yet another embodiment of the method is similar to the last embodiment described above, but includes several additional steps. The first additional step is to provide a semi-permeable material layer adjacent the chemical material layer, the semi-permeable material layer having an outer surface surrounded by the surrounding atmosphere. The second step is to transmit at least a portion of the detectable odor and/or an optical emission from at least a portion of the detectable discoloration through the semi-permeable material layer.

Persons skilled in the art will recognize that one or more additional semi-permeable materials or permeable material layers could be placed in between the vessel wall and the chemical material layer and/or in between the chemical material layer and the semi-permeable material layer employed in the present invention, as described in the embodiments above. Such arrangements would still function in accordance with the present invention as long as the additional semi-permeable or permeable materials are permeable to the stored gas (fluid) and/or to at least a portion of the chemical material from the chemical material layer. The additional semi-permeable or permeable material in such an arrangement could be in any of the following forms: solid, liquid, gaseous, or multi-phase.

In view of the above, the term "adjacent" as used herein means next to, nearby, or in close proximity, but also covers situations where one or more additional semi-permeable or permeable materials are positioned in between the chemical material layer and the vessel wall and/or in between the chemical material layer and the semi-permeable material layer utilized in some embodiments of the present invention. In such situations, if the additional semi-permeable or permeable materials are permeable to at least a portion of the chemical material, then the chemical material layer is considered to be "adjacent" the vessel wall, or "adjacent" the semi-permeable material layer utilized in some embodiments of the present invention, despite the fact that there are one or more intervening or intermediate additional materials.

### BRIEF DESCRIPTION OF SEVERAL VIEWS OF THE DRAWINGS

This invention will now be described by way of example with reference to the accompanying drawings in which;

FIG. 1 is a simplified, partial, cross-sectional view of a vessel in accordance with one embodiment of the present invention;

FIG. 2 is a simplified, partial, cross-sectional view of the vessel of FIG. 1 showing a leak point of gas through the vessel wall; and

FIG. 3 is a simplified, partial, cross-sectional view of a vessel in accordance with another embodiment of the present invention.

### DETAILED DESCRIPTION OF THE INVENTION

Novel systems and methods for leak detection of fluids are provided in which a leaking fluid reacts with a chemical material layer(s) on the outer wall of a fluid containing vessel and causes generation of a pungent odor and/or a discoloration (or color change) of the chemical material layer. The chemical material layer contains at least one chemical material which, upon reaction with the leaking fluid, generates an odor and/or changes color. The chemical materials may also be encapsulated between an appropriate semi-permeable material layer and the walls of the fluid (gas) storage vessels and piping. For purposes of the present invention, the term "vessel" is intended to include any vessel, piping, or piping system capable of containing a pressurized fluid.

The properties of the semi-permeable material layer are such that it permits the transport of the stored fluid(s) into the encapsulated space where the chemical material layer is located. The chemical material layer also may be encapsulated in between two layers of the semi-permeable materials of similar or different gas transport properties.

In the event of a fluid leak from a vessel, fluid will travel from the bulk storage area within the vessel to the fluid leak spot due to the fluid pressure gradient. As the leaking fluid passes thought the chemical material layer, the fluid reacts with the chemical material and thereby generates pungent odors and/or changes color of the chemical material layer. The fluid leak, therefore, may be detected by smell of the pungent odor and/or observation of the change of color of the chemical material layer. Thus, a gas leak may be detected without contaminating the bulk gas supply with any undesirable chemicals.

The semi-permeable material layer encapsulating the chemical material layer may be needed to protect the chemical material layer from the atmosphere surrounding the vessel. The nature of the encapsulating layer is such that it permits the transportation of the odoriferous material generated during the chemical reaction and is transparent or translucent so that discoloration of the chemical layer is visible. The encapsulation of the chemical materials in the semi- permeable layer may be accomplished by any of several methods known to those skilled in the art of encapsulation. Several of these methods are given below as examples.

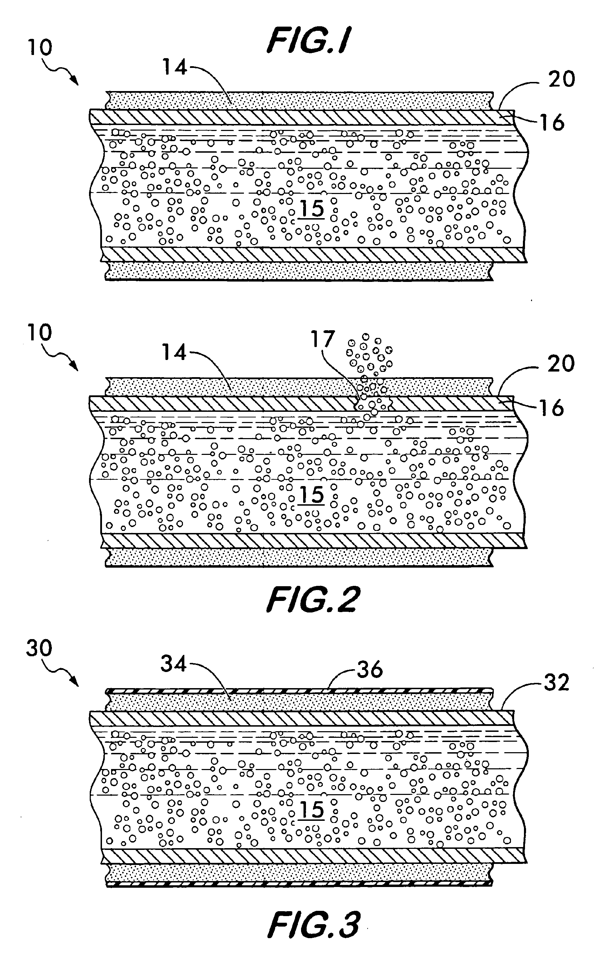

Referring now to the drawings, FIG.1 shows a simplified portion of a cross section of a vessel 10 in accordance with one embodiment of the present invention. The vessel 10 has a vessel wall 16 having an outer wall 20 where a chemical material layer 14 is located. The chemical material layer 14 fully covers the entire exterior of the vessel 10.

As illustrated in FIG. 2, when a leak develops in the vessel 10, stored fluid 15 rushes through the leak site orifice 17 from the outer wall 20. The leaking fluid reacts with the chemical material layer 14 and thereby generates pungent odors and/or shows discoloration.

FIG. 3 illustrates a simplified portion of a cross section of a vessel 30 in accordance with another embodiment of the present invention. The vessel 30 has an outer wall 32 or walls. The chemical material layer 34 is coated on the outer wall 32 of the vessel 30 such that the entire outer surface of the vessel 30 is completely covered with the chemical material layer 34. The semi-permeable material layer 36 completely covers the chemical material layer 34. Since the fluid leaking from the outer wall 32 has to permeate through the chemical material layer 34 before the fluid reaches the semi-permeable material layer 36, the leaking fluid reacts with the chemical material layer, thereby generating odors and/or giving the appropriate color change. The semi-permeable layer on top of the chemical material layer protects the chemical material from any harmful effect of the atmosphere surrounding the vessel.

### EXAMPLES

### A. For Discoloration Embodiment

Example 1. A solution of carotene consisting of 60 mg of carotene in 70 cc of ethanol at room temperature is reacted with hydrogen in the presence of Raney nickel for one hour giving a series of color changes from orange through yellow and greenish yellow to almost colorless forming the resulting product hydrocarotene.

Example 2. A continuous thin layer of the slurry in Example 1 is coated on the surface of the fluid storage vessel, such that a continuous layer of the reactive chemical material is left on the surfaces. A single layer or multiple layers of the slurry is placed on the surfaces. The chemical material layer is then sealed by coating over it a continuous layer of a semi-permeable or microporous polymeric or microporous non-polymeric material which has characteristics such that it does not permit the atmospheric gases to permeate into the chemical material layer, and the coated layer is either transparent or translucent. The thin encapsulating layer is formed on the odorant film, for example, using a rubbery polymer such as polydimethyl siloxane amongst other rubbery materials and glassy polymers, such as polyimides, polysulfones, polyamides, polyarylates, polyolefins, polycarbontes, and the like. The nature of the solvents used for these coatings is such that it does not dissolve the chemical material layer that is already on the surface. Single layer or multiple coatings are made to assure that the chemical material layer is fully encapsulated between the surface of the vessel and the coating polymer.

The coating on the vessel surfaces may be accomplished by several methods. The art of forming polymeric semi-permeable membranes and microporous membranes is well documented in textbooks, for example, in R.E. Kesting and A.K. Fritzsche, *Polymeric Gas Separation Membranes*, Wiley (1983) and in R.E. Kesting, *Synthetic Polymer Membranes*, Wiley (1985). The art of making microporous inorganic membranes is well documented, for example, in C.J. Brinker and G.W. Scherer, *Sol-Gel Science*, Academic Press (1990). In one simple method, the fluid vessel is dipped in the coating solution and withdrawn slowly. The coating solution is then drained and the surfaces are dried by volatilization of the solvents, either by natural evaporation or by forced evaporation caused by heating the surfaces, using air or inert gas circulation or the combination thereof. Alternatively, the coatings can be done by a spray coating method or other methods known to those skilled in the coating art. Pre-prepared semi-permeable material layers in the form of membranes may also be placed on the chemical material layer to encapsulate that layer. Such semi-permeable membranes can either be commercially purchased or fabricated separately using the known art described, for example, in the references cited herein.

Example 3. The chemical material in Example 1 is mixed with an appropriate polymer solution to make a coating solution capable of forming a film on the surface of the vessel. A 0.01 - 10 % w/w solution of the polymer in an appropriate organic solvent is made and the solution from Example 1 is added to it in sufficient quantity. A single layer or multi-layer coating of this material is applied to the outer walls of the fluid vessel. The chemical material/ polymer coating is then encapsulated by making an additional layer of rubbery or glassy polymers as described in Example 2.

Example 4. The first coating of an appropriate polymer or non polymer material is made on the surface of the vessel, then material in Example 1 is coated over it to promote adhesion of the chemical material on the surface of the vessel. The subsequent encapsulation is then done as in Example 2.

Example 5. The chemical coating material of Example 1 is encapsulated in an appropriate material into small ( micro) capsules. A slurry of these capsules in an appropriate permeable polymer, which acts as adhesion promoter, is applied on the surface of the vessel. The coating is then further encapsulated as in Example 2.

Example 6. The polymer coatings in Examples 1 to 5 consist of coatings of one or more rubbery or glassy polymers.

Example 7. The coatings made in Examples 1 to 6 where the initial layer (in contact with the outer wall of the vessel) and the final layer (in contact with the atmosphere) coatings do not contain reactive chemical materials. The reactive chemical is sandwiched between the two coating layers. These coatings are made in a similar manner as described in Example 2.

Example 8. The coatings in Example 7 are made using a glassy polymer such as polysulfone, polyamide, polyimide, polyarylate and other appropriate polymers.

Example 9. The coating in Examples 1 to 7 are made using glassy polymers with an overlay of the rubbery polymer or a rubbery polymer with an overlay of glassy polymers, in any combination, depending on the number of total layers desired.

Example 10 to Example 14. A glassy polymer solution is made in an appropriate solvent (Example 10), solvent mixture (Example 11), solvent / nonsolvent mixture (Example 12), solvent/poreformer mixer (Example 13) or solvent / nonsolvent / poreformer mixer (Example 14) in a polymer concentration from 0.5% to 50% polymer depending on the nature of the polymer, solvent, nonsolvent and poreformer used in a given solution. The solution is coated in the vessel of Example 2 and the solvent is evaporated. The resulting coating may have a microporous network. The coating is dried and the pores are filled with a slurry of Example 1 containing reactive material.

Example 15. The chemical material of Example 1 is immobilized on the solid sorbents such as clays, zeolites, cellulosic materials (e.g., saw dust), polymer powder, and the like. The immobilized chemical material of Example 1 is used in Examples 2 to 14 for the formation of the encapsulated reactive chemical coatings.

### B. For Pungent Odors Embodiment

Example 1. A thin layer of the chemical dimethyl disulfide along with an appropriate catalyst is applied on the entire outer surface of a vessel containing hydrogen under pressure. When a hydrogen leak occurs in the vessel, hydrogen rushes out from the leak spot and comes in contact with the chemical dimethyl disulfide, where it reacts to generate hydrogen sulfide gas, which has a pungent odor detectable by the sense of smell of living beings.

Example 2. A continuous thin layer of the chemicals in Example 1 is coated on the surface of the fluid storage vessel, such that a continuous layer of the reactive chemical material is left on the surfaces. A single layer or multiple layers of the chemicals is placed on the surfaces. The chemical material layer is then sealed by coating over it a continuous layer of a semi-permeable or microporous polymeric or microporous non-polymeric material which has characteristics such that it does not permit the atmospheric gases to permeate into the chemical material layer, but will fail as a result of the pressure caused by the leaking gas, thus releasing the pungent odor in the atmosphere. The thin encapsulating layer is formed on the chemical material layer, for example, using a rubbery polymer such as polydimethyl siloxane amongst other rubbery materials and glassy polymers such as polyimides, polysulfones, polyamides, polyarylates, polyolefins, polycarbontes, and the like. The nature of the solvents used for these coatings is such that it does not dissolve the chemical material layer that is already on the surface. Single layer or multiple coatings are made to assure that the chemical material layer is fully encapsulated between the surface of the vessel and the coating polymer.

The formation of a sealing layer over the chemical material layer on the outer surface of the gas storage vessel may be accomplished by several methods. As discussed above in the second paragraph for Example 2 For Discoloration Embodiment, the art of forming polymeric semi-permeable membranes and microporous membranes is well documented, and the discussion in that paragraph is incorporated herein by reference.

Example 3. The chemical material in Example 1 is mixed with an appropriate polymer solution to make a coating solution capable of forming a film on the surface of the vessel. A 0.01 - 10 % w/w solution of the polymer in an appropriate organic or aqueous solvent is made and the solution from Example 1 is added to it in sufficient quantity. A single layer or multi-layer coating of this material is applied to the outer walls of the fluid vessel. The chemical material/ polymer coating is then encapsulated by making an additional layer of rubbery or glassy polymers as described in Example 2.

Example 4. The first coating of an appropriate polymer or non-polymer material is made on the surface of the vessel, then material in Example 1 is coated over it to promote adhesion of the chemical material on the surface of the vessel. The subsequent encapsulation is then done as in Example 2.

Example 5. The chemical coating material of Example 1 is encapsulated in an appropriate material into small ( micro) capsules. A slurry of these capsules in an appropriate permeable polymer, which acts as adhesion promoter, is applied on the surface of the vessel. The coating is then further encapsulated as in Example 2.

Example 6. The polymer coatings in Examples 1 to 5 consist of coatings of one or more rubbery or glassy polymers.

Example 7. The coatings made in Examples 1 to 6 where the initial layer (in contact with the outer wall of the vessel) and the final layer (in contact with the atmosphere) coatings do not contain reactive chemical materials. The reactive chemical is sandwiched between the two coating layers. These coatings are made in a similar manner as described in Example 2.

Example 8. The coatings in Example 7 are made using a glassy polymer such as polysulfone, polyamide, polyimide, polyarylate, polyolefins, polycarbonates, and other appropriate polymers.

Example 9. The coating in Examples 1 to 7 are made using glassy polymers with an overlay of the rubbery polymer or a rubbery polymer with an overlay of glassy polymers, in any combination, depending on the number of total layers desired.

Example 10 to Example 14. A glassy polymer solution is made in an appropriate solvent (Example 10), solvent mixture (Example 11), solvent / nonsolvent mixture (Example 12), solvent/poreformer mixer (Example 13) or solvent / nonsolvent / poreformer mixer (Example 14) in a polymer concentration from 0.5% to 50% polymer depending on the nature of the polymer, solvent, nonsolvent and poreformer used in a given solution. The solution is coated in the vessel of Example 2 and the solvent is evaporated. The resulting coating may have a microporous network. The coating is dried and the pores are filled with a slurry of Example 1 containing reactive material.

Example 15. The chemical material of Example 1 is immobilized on the solid sorbents such as clays, zeolites, cellulosic materials (e.g., saw dust), polymer powder, and the like. The immobilized chemical material of Example 1 is used in Examples 2 to 14 for the formation of the encapsulated reactive chemical coatings.

While various embodiments of the invention have been described in detail with reference to the drawings and the specific examples above, it will be apparent to one skilled in the art that various changes and modifications can be made to those embodiments, drawings, and examples without departing from the spirit and scope of the invention as defined in the claims which follow.

## Claims

1. An apparatus for detecting a leak of a fluid from a vessel having an inner wall and an outer wall, comprising at least one chemical material layer adjacent the outer wall, at least a portion of the chemical material layer adapted to undergo a chemical reaction with a portion of the fluid leaking through the outer wall.

2. An apparatus as in claim 1, further comprising at least one semi-permeable material layer adjacent the chemical material layer.

3. An apparatus as in claim 1, wherein the chemical reaction results in a detectable discoloration of the chemical material layer.

4. An apparatus as in claim 1, wherein the chemical reaction results in a detectable odor being emitted from the chemical material layer.

5. An apparatus as in claim 1, wherein the chemical reaction results in a detectable discoloration of the chemical material layer and/or in a detectable odor being emitted from the chemical material layer.

6. An apparatus as in claim 1, wherein the fluid is hydrogen.

7. An apparatus as in claim 1, wherein at least a portion of the fluid is a gas stored and/or transported in the vessel.

8. An apparatus as in claim 7, wherein at least a portion of the gas is at or above an ambient pressure.

9. An apparatus as in claim 3, wherein the detectable discoloration is detectable by a sense of sight of a living being.

10. An apparatus as in claim 4, wherein the detectable odor is detectable by a sense of smell of a living being.

11. An apparatus as in claim 2, wherein at least a portion of the semi-permeable material layer is a polymer selected from a group consisting of a rubbery polymer, a glassy polymer, and combinations thereof, the rubbery polymer being selected from a group consisting of polydimethyl siloxanes, poly phasphazenes, and combinations thereof, and the glassy polymer being selected from a group consisting of polyimides, polysulfones, polyamides, polyarylates, polyolefins, polyetherketones, polycarbonates, and combinations thereof.

12. A vessel having an apparatus as in claim 1 for detecting a leak of a fluid from the vessel.

13. An apparatus for detecting a leak of a pressurized gas from a vessel having an inner wall and an outer wall, comprising at least one chemical material layer adjacent the outer wall, at least a portion of the chemical material layer adapted to undergo a chemical reaction with a portion of the fluid leaking through the outer wall, wherein the chemical reaction results in a detectable discoloration of the chemical material layer, or a detectable odor being emitted from the chemical material layer, or both a detectable discoloration of the chemical material layer and a detectable odor being emitted from the chemical material layer, the detectable discoloration being detectable by a sense of sight of a living being and the detectable odor being detectable by a sense of smell of a living being.

14. An apparatus as in claim 13, further comprising at least one semi-permeable material layer adjacent the chemical material layer.

15. An apparatus as in claim 13, wherein the pressurized gas is hydrogen.

16. A method for detecting a flow of a fluid leaking from a vessel having an inner wall and an outer wall, comprising the steps of:
providing at least one chemical material layer adjacent the outer wall, at least a portion of the chemical material layer adapted to undergo a chemical reaction with the fluid;
transmitting the flow of the fluid from the vessel through the outer wall to the chemical material layer;
reacting in the chemical reaction at least a portion of the chemical material layer with a portion of the flow of the fluid transmitted to the chemical material layer, whereby the chemical reaction results in a detectable discoloration of the chemical material layer and/or a detectable odor being emitted from the chemical material layer to a surrounding atmosphere; and
detecting the detectable discoloration and/or the detectable odor.

17. A method as in claim 16, comprising the further steps of:
providing at least one semi-permeable material layer adjacent the chemical material layer, the semi-permeable material layer having an outer surface surrounded by the surrounding atmosphere; and
transmitting at least a portion of the detectable odor and/or an optical emission from at least a portion of the detectable discoloration through the semi-permeable material layer.

18. A method as in claim 16, wherein the fluid is hydrogen.

19. A method as in claim 16, wherein at least a portion of the fluid is a gas stored and/or transported in the vessel.

20. A method as in claim 19, wherein at least a portion of the gas is at or above an ambient pressure.

21. A method as in claim 16, wherein the detectable discoloration is detectable by a sense of sight of a living being.

22. A method as in claim 16, wherein the detectable odor is detectable by a sense of smell of a living being.

23. A method as in claim 17, wherein at least a portion of the semi-permeable material layer is a polymer selected from a group consisting of a rubbery polymer, a glassy polymer, and combinations thereof, the rubbery polymer being selected from a group consisting of polydimethyl siloxanes, poly phasphazenes, and combinations thereof, and the glassy polymer being selected from a group consisting of polyimides, polysulfones, polyamides, polyarylates, polyolefins, polyetherketones, polycarbonates, and combinations thereof.

24. A method for detecting a flow of a pressurized gas leaking from a vessel having an inner wall and an outer wall, comprising the steps of:
providing at least one chemical material layer adjacent the outer wall, at least a portion of the chemical material layer adapted to undergo a chemical reaction with the pressurized gas;
transmitting the flow of the pressurized gas from the vessel through the outer wall to the chemical material layer;
reacting in the chemical reaction at least a portion of the chemical material layer with a portion of the flow of the pressurized gas transmitted to the chemical material layer, whereby the chemical reaction results in a detectable discoloration of the chemical material layer and/or a detectable odor being emitted from the chemical material layer to a surrounding atmosphere; and
detecting the detectable discoloration by a sense of sight of a living being and/or the detectable odor by a sense of smell of a living being.

25. A method as in claim 24, comprising the further steps of:
providing at least one semi-permeable material layer adjacent the chemical material layer, the semi-permeable material layer having an outer surface surrounded by the surrounding atmosphere; and
transmitting at least a portion of the detectable odor and/or an optical emission from at least a portion of the detectable discoloration through the semi-permeable material layer.

26. A method as in claim 24, wherein the pressurized gas is hydrogen.
